# EUROPEAN PATENT SPECIFICATION

(11) **EP 0 329 788 B1**
(45) Date of publication and mention of the grant of the patent: **13.10.1993**
(21) Application number: 88905218.9
(22) Date of filing: 08.06.1988
(51) Int. Cl.: F16F 9/10

(54) **MULTI-PLATE DAMPER USING VISCOUS FLUID**
DÄMPFER MIT MEHREREN PLATTEN UND DER VERWENDUNG EINES VISKOSEN FLUIDS
AMORTISSEUR A PLATEAUX MULTIPLES UTILISANT UN FLUIDE VISQUEUX

(30) Priority: 10.06.1987 JP 144881/87; 10.06.1987 JP 144882/87; 22.06.1987 JP 154794/87; 01.07.1987 JP 164665/87; 01.07.1987 JP 164666/87; 08.07.1987 JP 170713/87
(43) Date of publication of application: 30.08.1989
(73) Proprietor: SUGATSUNE INDUSTRIAL CO., LTD., Chiyoda-ku Tokyo 101 (JP)
(72) Inventor: SUGASAWARA, Seiji Sugatsune Industrial Co., Ltd., Chiyoda-ku Tokyo 101 (JP); TSUNEKI, Ken Sugatsune Industrial Co., Ltd., Tokyo 101 (JP); OHSHIMA, Kazuyoshi Sugatsune Industrial Co., Ltd., Chiyoda-ku Tokyo 101 (JP); NAKAYAMA, Youjiroh Sugatsune Industrial Co., Ltd., Chiyoda-ku Tokyo 101 (JP); HAYAKAWA, Tatsuya Sugatsune Industrial Co., Ltd., Chiyoda-ku Tokyo 101 (JP); TAMURA, Seiichiroh Sugatsune Industrial Co., Ltd., Chiyoda-ku Tokyo 101 (JP)
(74) Representative: Gibson, Stewart Harry
(86) International application number: PCT/JP88/00550
(87) International publication number: WO 88/09884

(56) References cited:
- EP-A- 0 025 425
- FR-A- 1 028 336
- JP-A-53 127 976
- JP-B- 482 722
- US-A- 2 514 137
- US-A- 3 119 469

## Description

This invention relates to a damper using a viscous fluid such as polyisobutylene.

US-A-2 514 137 discloses a damper comprising a casing containing viscous fluid, a plurality of discs stacked inside the casing and a rotatable shaft extending along the axis of the casing, alternate discs being keyed to the casing or to the shaft respectively but being free to move along the axis of the casing.

In use, when the shaft is rotated by an external force, the discs keyed to the shaft are rotated in the viscous fluid, thereby generating a viscous drag between the rotating discs and the discs keyed to the casing which are stationary. The viscous drag is caused by the shearing forces developed in the moving of the fluid layers between the discs. The viscous fluid flows toward the areas where the viscous drag is high so that if there is variation in clearances between the discs, then the discs are axially moved by the flow of the fluid into the areas where the clearance between the discs is small (and the viscous drag against shearing force is high). The flow of fluid equalizes all the clearances between the adjacent discs throughout the total effective length of the damper, thereby eliminating locally generated drags which may damage the members of the damper assembly. This is the so-called alignment effect.

The damper in accordance with this invention is characterized in that a radially extending slot is formed in at least one of the discs.

The slots accelerate the flow of viscous fluid from the circumferential area to the central area of the casing so as to ensure the alignment effect occurs rapidly.

An embodiment of this invention will now be described by way of example only and with reference to the accompanying drawings, in which:
FIGURE 1a is a sectional view of a prior art damper;
FIGURE 1b is an exploded perspective view of the damper of Figure 1;
FIGURE 1c is a perspective view of the damper of Figure 1a; and
FIGURE 2 is a plan view of a disc for use in a damper in accordance with this invention.

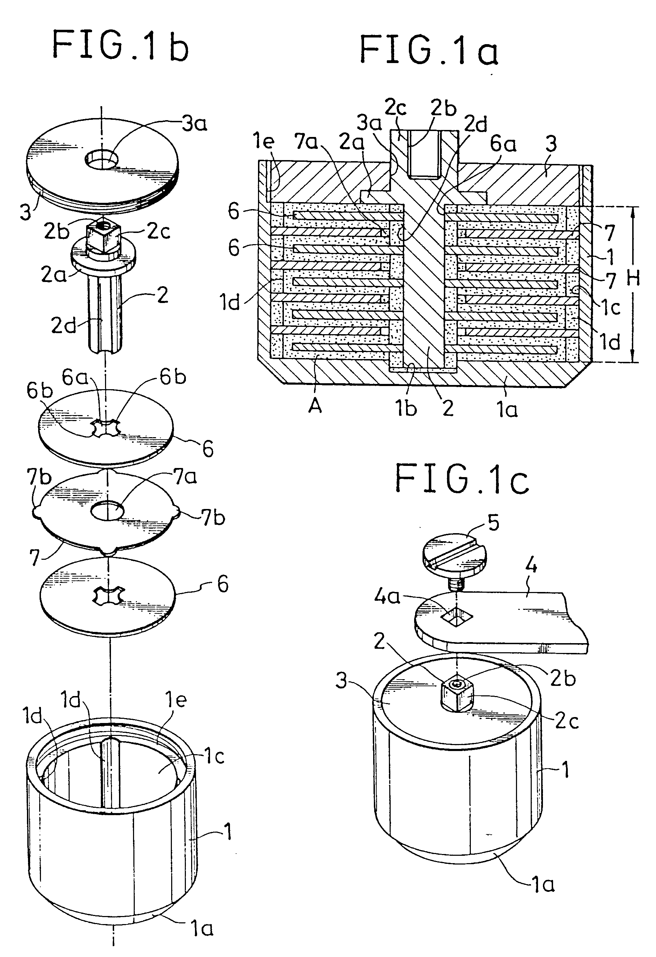

Referring to Figures 1a to 1c, there is shown a prior art damper comprising a cylindrical casing 1 provided with a bearing recess 1b at its bottom end 1a, and symmetrically arranged vertical grooves 1d on its inner side wall 1c.

A shaft 2 is rotatably mounted along the longitudinal axis of the casing 1 so that its lower end engages into the bearing recess 1b. A cover plate 3 is screwed into an upper threaded portion 1e of the casing and abuts a flange 2a formed on the upper section of the shaft 2 so as to hold the shaft 2 in place. A keyed top portion 2c of the shaft 2 projects through an aperture 3a in the cover plate 3. An axial threaded bore 2b is formed in the top portion 2c of the shaft.

The keyed top portion 2c of the shaft 2 engages with a complementary aperture 4a formed in an arm 4. A screw 5 holds the arm 4 onto the shaft 2 so that when a turning force is applied to the arm 4, the force is transmitted to the shaft 2.

The casing 1 is sealed by the cover plate 3 so that it sealingly contains a viscous fluid A of a high-molecular material such as polyisobutylene, pitch or sticky water glass. Alternate movable and fixed discs 6,7 are vertically stacked inside the casing 1.

The movable discs 6 are keyed to the shaft 2 by notches 6b formed in a central aperture 6a which engage with complementary vertical ridges 2d formed on the outer surface of the shaft 2. The movable discs 6 thus rotate with the shaft 2, but they are free to move in the axial direction along the shaft 2.

The fixed discs 7 have a large circular aperture 7a in their centre so that they are a clearance fit with the shaft 2. The periphery of the fixed discs 7 are formed with projections 7b which engage with the vertical grooves 1d formed on the inner wall 1c of the casing. Thus the fixed discs 7 are fixed against rotational movement, but are free to move axially with respect to the shaft 2.

In use, when an external turning force is applied to the arm 4, the shaft 2 and movable discs 6 are rotated, This rotational movement generates a viscous drag caused by the shearing force of the fluid between the discs 6,7. The clearance between the discs 6,7 are equalized by the so-called alignment effect described earlier, consequently the discs 6,7 evenly spread out along the length of the casing 1.

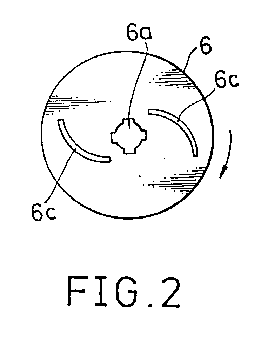

Referring to Figure 2 there is shown a disc 6 for use in a damper in accordance with this invention. Arc-shaped slots 6c are formed on the disc 6 to accelerate the flow of viscous liquid from the circumferential area to the central area of the casing when the disc 6 is rotated in the direction of the arrow.

## Claims

1. A damper comprising a casing (1) containing viscous fluid (A), a plurality of discs (6,7) stacked inside the casing (1) and a rotatable shaft (2) extending along the axis of the casing (1), alternate discs (6,7) being keyed to the shaft (2) or to the casing (1) respectively but being free to move along the axis of the casing **characterised in that** a radially extending slot (6c) is formed in at least one of the discs (6,7).

2. A damper as claimed in claim 1 **characterised in that** the slot (6c) is inclined with respect to the radius of the disc (6).

3. A damper as claimed in claim 2 **characterised in that** the slot (6c) is arcuate.

## Patentansprüche

1. Dämpfer mit einem Gehäuse (1), das ein viskoses Fluid (A) enthält, mehreren innerhalb des Gehäuses (1) gestapelten Scheiben (6,7) und einer drehbaren Welle (2), die sich längs der Achse des Gehäuses (1) erstreckt, wobei die Scheiben (6, 7) abwechselnd an der Welle (2) bzw. am Gehäuse (1) verkeilt sind, sich aber längs der Gehäuseachse frei bewegen können, dadurch gekennzeichnet, daß in mindestens einer der Scheiben (6, 7) ein sich in radialer Richtung erstreckender Schlitz (6c) ausgebildet ist.

2. Dämpfer nach Anspruch 1, dadurch gekennzeichnet, daß der Schlitz (6c) gegen den Radius der Scheibe (6) geneigt ist.

3. Dämpfer nach Anspruch 2, dadurch gekennzeichnet, daß der Schlitz 6c bogenförmig ist.

## Revendications

1. Amortisseur comprenant un boitier (1) contenant un fluide visqueux (A), une pluralité de plateaux (6,7) empilés à l'intérieur du boîtier (1) et un arbre rotatif (2) s'étendant le long de l'axe du boitier (1), des disques alternants (6,7) étant verrouillés à l'arbre (2) ou au boitier (1), respectivement, mais sont libres à se déplacer le long de l'axe du boîtier, caractérisé en ce qu'une fente s'étendant radialement (6c) est formée dans au moins l'un des plateaux (6, 7).

2. Amortisseur selon la revendication 1, caractérisé en ce que la fente (6c) est inclinée relativement au rayon du disque (6).

3. Amortisseur selon la revendication 2, caractérisé en ce que la fente (6c) est arquée.
